# EUROPÄISCHE PATENTSCHRIFT

(11) **EP 2 589 114 B1**
(45) Veröffentlichungstag und Bekanntmachung des Hinweises auf die Patenterteilung: **27.01.2016**
(21) Anmeldenummer: 11736277.2
(22) Anmeldetag: 27.06.2011
(51) Int. Cl.: H01R 4/50

(54) **SOLARSTECKVERBINDUNG**
SOLAR CONNECTION
CONNECTEUR SOLAIRE

(30) Priorität: 29.06.2010 DE 102010025549
(43) Veröffentlichungstag der Anmeldung: 08.05.2013
(73) Patentinhaber: Phoenix Contact GmbH & Co. KG, 32825 Blomberg (DE)
(72) Erfinder: FEYE-HOHMANN, Jürgen, 32756 Detmold (DE)
(74) Vertreter: Muth, Bruno
(86) Internationale Anmeldenummer: PCT/EP2011/003158
(87) Internationale Veröffentlichungsnummer: WO 2012/000640

(56) Entgegenhaltungen:
- US-A- 4 944 686
- US-B1- 6 705 884
- US-B1- 7 121 872
- US-B1- 7 425 153

## Beschreibung

Die Erfindung betrifft eine Solarsteckverbindung für Fotovoltaikanlagen, welche insbesondere zur elektrischen Verbindung einzelner Solarmodule dient und die dazu geeignet ist, die entsprechenden Stromstärken und Spannungen sicher und dauerhaft zu übertragen. Insbesondere bezieht sich die Erfindung auf Steckverbindungen für Fotovoltaikanlagen, die beispielsweise auf Dächern von Häusern montiert werden, um einen nennenswerten Beitrag zur Stromproduktion beizutragen. Die dort produzierte Strommenge wird regelmäßig in das öffentliche Netz eingespeist und steht somit allgemein zur Verfügung. Schon kleinere Anlagen können jährlich 10 000 Kilowatt Stunden und mehr an Strom produzieren.

Im Stand der Technik sind verschiedenste Solarsteckverbindungen bekannt geworden, die sich zum Verbinden einzelner Solarmodule eignen.

Unter anderem beschreibt die DE 10 2009 056 535 A1 ein Kontaktierungssystem, bei welchem ein Kontaktstift, welcher mit einem Solarmodul verbunden ist, in die Litze einer Anschlussleitung eingeschoben wird. Andere elektrische Anschlüsse mit Kontaktstiften sind aus der US 6,848,934, der DE 1 821 749, der US 7,425,153 B1, der US 7,121,872 B1 der US 4,944,686 und der FR 1.285.750 bekannt.

Die bekannten Solarsteckverbindungen funktionieren zuverlässig und auch dauerhaft. Im Zuge einer zunehmenden Verbreitung der Montage von Fotovoltaikanlagen auf Dächern und dergleichen erledigen die Montage aber nicht immer Fachfirmen, die auf die elektrische Verdrahtung spezialisiert sind, sondern Betriebe, die sich auf die Montage solcher Fotovoltaikmodule auf Dachflächen ausgerichtet haben. Auf Dachflächen unterliegt die Montage oftmals etwas erschwerten Bedingungen, da viele Dächer geneigt sind. Spezialwerkzeuge für unterschiedlichste Verbindungen ist oftmals Vorort nicht vorhanden. Weiterhin muss bei Fotovoltaikanlagen ein langjähriger zuverlässiger Betrieb gewährleistet werden, damit die hohen Investitionskosten sich amortisieren.

Der Ausfall eines einzelnen Steckverbinders kann zu einem erheblichen Wartungsaufwand führen, da alle Steckverbinder gegebenenfalls untersucht werden müssen, um die defekte Steckverbindung fündig zu machen. Ein erhöhter Wartungsbedarf kann sich nachteilig auf das Geschäft ausüben.

Deshalb ist es wichtig, eine langjährige und zuverlässige Betriebsdauer gewährleisten zu können. Außerdem ist es sehr vorteilhaft, wenn die durchzuführenden Montagearbeiten ohne elektrisches Spezialwerkzeug auskommen können.

Es ist deshalb die Aufgabe der vorliegenden Erfindung eine zuverlässige elektrische Steckverbindung von Fotovoltaikanlagen zur Verfügung zu stellen, welche einfach und insbesondere ohne Spezialwerkzeug zu montieren ist und welche eine dauerhafte und zuverlässige elektrische Verbindung ermöglicht.

Diese Aufgabe wird gelöst durch die Solarsteckverbindung mit den Merkmalen des Anspruchs 1. Bevorzugte Weiterbildungen der Erfindung sind Gegenstand der Unteransprüche. Weitere Vorteile und Merkmale ergeben sich aus dem Ausführungsbeispiel.

Eine erfindungsgemäße Solarsteckverbindung ist insbesondere für den Einsatz an Fotovoltaikanlagen vorgesehen und umfasst wenigstens ein Kontaktgehäuse und wenigstens ein Anschlussgehäuse, wobei das Anschlussgehäuse mit dem Kontaktgehäuse verbindbar ist und zur Aufnahme wenigstens eines freikonfektionierbaren Kabels und insbesondere Solarkabels mit einem Leiter dient. Dabei ist an dem Kontaktgehäuse wenigstens eine Kontaktnadel zur Kontaktierung des Leiters eines anzuschließenden Kabels angeordnet. Kontaktgehäuse wenigstens eine Kontaktnadel zur Kontaktierung des Leiters eines anzuschließenden Kabels angeordnet. An dem Kontaktgehäuse ist eine Gewinde angeordnet, welches dafür vorgesehen ist, mit einem an dem Anschlussgehäuse vorgesehenen Gewinde zusammen zu wirken, um beim Verschrauben des Kontaktgehäuses und des Anschlussgehäuses die Kontaktnadel von vorn definiert in den Leiter des Kabels einzuführen. Weiterhin ist an dem Anschlussgehäuse eine Rückschiebesicherung vorgesehen. Diese Rückschiebesicherung sichert ein vom hinteren Ende aus in das Anschlussgehäuse eingeschobenes Kabel, wenn vom vorderen Ende Druck auf das darin eingeführte Kabel ausgeübt wird.

Die erfindungsgemäße Solarsteckverbindung hat viele Vorteile, da sie es erlaubt ein freikonfektionierbares elektrisches Kabel in einem Anschlussgehäuses vorzusehen und den Leiter des Kabels mit einer Kontaktnadel des Kontaktgehäuses elektrisch leitend zu verbinden. Dabei wird über die Schraubverbindung des Kontaktgehäuses mit dem Anschlussgehäuse eine zuverlässige und dauerhafte wirksame Verbindung gewährleistet, die auch über Jahre oder sogar Jahrzehnte hinweg eine sichere Kontaktierung ermöglicht.

Besonders vorteilhaft ist, dass durch die erfindungsgemäße Solarsteckverbindung eine kleinbauende elektrische Steckverbindung zur Verfügung gestellt wird, die sich für den flexiblen Einsatz bei der Montage von Fotovoltaikanlagen eignet. Typischerweise sind an Solarmodulen für Fotovoltaikanlagen elektrische Anschlusskabel vorgesehen, die beispielsweise über einen rastenden Steckverschluss verfügen, um ein Solarmodul mit einem nächsten Solarmodul zu verbinden. Solche herkömmlichen Steckverbinder funktionieren zufrieden stellend. Aufwendig wird es allerdings, wenn aufgrund baulicher Begebenheiten durch einen Kamin, einen Hausvorsprung oder eine Dachgaube oder dergleichen der Abstand zwischen einem Solarmodul und dem nächsten Solarmodul Spezialwerkzeug für solche Tätigkeiten führen die Monteure nicht immer mit sich. Außerdem ist aufgrund der oft erschwerten Arbeitsbedingungen auf der Dachschräge eines Häuserdaches es nicht immer möglich, alle benötigten Werkzeuge bei sich zu führen.

Insbesondere, wenn ein solches Solarkabel durch ein Rahmenprofil eines Fensters oder durch einen engen Kabelkanal durchgeführt werden muss, ergeben sich hohe Anforderungen an den Raumbedarf. Hier ermöglicht die Erfindung eine besonders kleinbauende Solarsteckverbindung, bei der die Solarsteckverbindung mit dem Anschlussgehäuse und dem Kontaktgehäuse insgesamt nur sehr wenig Raum beansprucht. Das wird unter anderen dadurch gewährleistet, dass die Kontaktnadel von vorn definiert in den Leiter des Kabels eingeführt wird. Insbesondere bedeutet dies, dass die Kontaktnadel axial in den axial ausgerichteten Leiter eingeführt wird. Durch die Verschraubung wird dabei ein definiertes Eindringen der Kontaktnadel in den Leiter des Kabels sichergestellt, sodass eine zuverlässige, reproduzierbare und dauerhafte sichere Verbindung ermöglicht wird. Durch die axiale Anordnung des Anschlusskabels, der Kontaktnadel und der zugehörigen Gehäuseteile ist es möglich, eine Solarsteckverbindung mit besonders geringem Außendurchmesser zur Verfügung zu stellen.

Dabei wird es durch die Konstruktion erlaubt, das anzuschließende elektrische Kabel frei zu konfektionieren und beispielsweise über einen Seitenschneider oder dergleichen auf die gewünschte Länge zu bringen. Die am vorderen Ende des anzuschließenden Kabels vorgesehene Eintrittsfläche für die Kontaktnadel ist aber insbesondere etwa senkrecht zur Längserstreckung des Kabels ausgerichtet und stellt eine definierte Fläche für das Eindringen der Kontaktnadel zur Verfügung. Durch den einfachen Aufbau wird eine Abisolierung des Solarkabels nicht benötigt.

Im Unterschied zu sogenannten Pierce-Anschlüssen, bei denen regelmäßig der anzuschließende Leiter unter einem Winkel oder senkrecht zu dem angeschlossenen Leiter verläuft, wird durch die erfindungsgemäße Solarsteckverbindung erheblich weniger Raumbedarf benötigt.

Außerdem wird durch die besondere Anschlussgeometrie, bei dem die Kontaktnadel von vorn definiert in den Leiter des Kabels eingeführt wird und bei der die Kontaktnadel axial in den axial ausgerichteten Leiter eintaucht eine besonders gute elektrische Verbindung zwischen der Kontaktnadel und dem Leiter des anzuschließenden Kabels gewährleistet, wodurch die bei Fotovoltaikanlagen auftretenden hohen Stromstärken und hohen Spannungen zuverlässig und dauerhaft übertragen werden können. Insgesamt entsteht durch das axiale Eindringen der Kontaktnadel in den axial ausgerichteten Leiter eine große Kontaktfläche, die erhebliche Stromstärken übertragen kann.

Um ein zuverlässiges Eindringen der Kontaktnadel in einen Leiter des anzuschließenden Kabels zu gewährleisten, ist die Kontaktnadel insbesondere mit einer sich verjüngenden Kontaktspitze ausgerüstet.

Vorzugsweise weist das Kontaktgehäuse einen hohlzylindrischen Aufnahmebereich auf, indem die Kontaktnadel zentrisch angeordnet ist. Das Anschlussgehäuse weist insbesondere einen hohlzylindrischen Kabelaufnahmebereich auf, der zur Aufnahme eines Kabels mit einem zentrisch angeordneten Leiter vorgesehen ist.

Unter dem Begriff "hohlzylindrisch" ist im Sinne dieser vorliegenden Anmeldung zu verstehen, dass der Aufnahmebereich und der Kabelaufnahmebereich jeweils im Wesentlichen einen zylindrischen Hohlraum aufweisen. Insbesondere kann der Aufnahmebereich an dem Kontaktgehäuse insgesamt oder abschnittsweise eine z. B. konisch verlaufende Verjüngung aufweisen, um durch die Verjüngung ein besonders festes Klemmen der Kontaktspitze in dem Leiter des anzuschließenden Kabels zu gewährleisten.

In bevorzugten Ausgestaltungen weist das Kotaktgehäuse ein Innengewinde auf, welches mit dem Außengewinde des Anschlussgehäuses zusammenwirkt, um die Schraubverbindung herzustellen. Das Anschlussgehause kann beispielsweise im Wesentlichen als Hohlschraube ausgeführt sein, welche im Inneren das anzuschließende Kabel aufnimmt, während radial außen ein Außengewinde zum Verschrauben mit dem Innengewinde des Kontaktgehäuses vorgesehen ist.

Vorzugsweise weist die Kontaktnadel eine sich zum Ende hin verjüngende Spitze auf, wobei an der Kontaktnadel auch zwei oder mehrere radiale Durchmesserstufen vorgesehen sein können, an denen sich die Kontaktspitze stärker verjüngt.

Besonders bevorzugt beträgt das Verhältnis von Gewindesteigung pro Umdrehung zu dem Außendurchmesser des Kontaktgehäuses weniger als 1:3. Insbesondere ist das Verhältnis kleiner als 1:5. Ein solches Verhältnis der Gewindesteigung zum Außendurchmesser des Kontaktgehäuses definiert ein relativ feines Gewinde, wodurch ein hohes Übersetzungsverhältnis der Eindringkraft gegenüber der aufzuwendenden Drehkraft beim Verschrauben der Schraubverbindung erreicht wird. Insbesondere wird die aufgewendete Kraft zum Drehen der Schraubverwendung in wenigstens um den Faktor 5 und insbesondere um den Faktor 8 und besonders bevorzugt um den Faktor 10 vergrößert als Eindringkraft der Kontaktnadel in den Leiter des anzuschließenden Kabels übertragen. Dadurch wird gewährleistet, dass mit eine relativ geringen Drehkraft die von Hand aufgebracht werden kann, ein zuverlässiges und dauerhaftes sicheres Eindringen der Kontaktnadel in den Leiter des anzuschließenden Kabels gewährleistet werden kann.

In allen Ausgestaltungen ist es bevorzugt, dass an dem Anschlussgehäuse eine Rückschiebesicherung vorgesehen ist, welche ein von hinterem Ende aus in das Anschlussgehäuse eingeschobenes Kabel sichert, wenn von dem vorderen Ende Druck auf ein darin eingeführtes Kabel ausgeübt wird. Durch die Rückschiebesicherung wird gewährleistet, dass ein einmal in das Anschlussgehäuse eingeführtes Kabel nicht durch Druck von vorn auf das eingeführte Kabel wieder aus dem Anschlussgehäuse heraus geschoben werden kann. Insbesondere wird durch die Rückschiebesicherung auch gewährleistet, dass das Kabel mit dem Leiter definiert in dem Anschlussgehäuse gehalten wird. Ein seitliches Verbiegen des Kabels wird durch die Rückschiebesicherung insbesondere auch verhindert. Die Rückschiebesicherung umfasst auch die das Kabel umgebende Wandung, die ein seitliches Ausweichen verhindert.

Vorzugsweise umfasst die Rückschiebesicherung eine Federeinrichtung mit mehreren Federzungen. Dabei befinden sich die näher am hinteren Ende des Anschlussgehäuses angeordneten hinteren Ende der Federzunge radial weiter außen als die weiter vorn angeordneten vorderen Enden der Federzungen.

Die sich weiter hinten befindenden Enden der Federzungen stützen sich insbesondere nach hinten hin an dem Anschlussgehäuse oder einem Absatz im Anschlussgehäuse oder dergleichen ab.

Die Federzungen sind insbesondere dafür vorgesehen, sich in einem flachen oder spitzen Winkel an der Leiterisolation eines anzuschließenden Kabels anzulegen. Die vorderen Spitzen der Federzungen können leicht in die Kabelisolation eindringen und sich dort verklemmen, sodass bei einem Druck auf das vordere an dem Anschlussgehäuse aufgenommene Leiterende eine Verstärkung der Rückhaltekraft der Federzungen auftritt, da sich die hinteren Enden der Federzungen an dem Anschlussgehäuse abstützen. So wird ein sich selbstverstärkendes System realisiert, bei dem unanhängig von der Druckkraft von vorn oder auch der Zugkraft an dem Kabel von hinten eine entsprechend große Sicherungskraft aufgebracht wird.

Die Rückschiebesicherung grenzt vorzugsweise an eine Dichtungseinrichtung an. Besonders bevorzugt wird eine Bewegung der Federzunge der Rückschiebesicherung durch eine konische Anschlagfläche an der Dichtungseinrichtung begrenzt. Dadurch wird die durch die Rückschiebesicherung mögliche Rückhaltekraft noch weiter vergrößert. Außerdem trägt die Dichtungseinrichtung zu einem dauerhaft zuverlässigen Betrieb bei.

In allen Ausgestaltungen können an dem Kontaktgehäuse und dem Anschlussgehäuse Rastmittel vorgesehen sein, die dazu dienen, dass Kontaktgehäuse und das Anschlussgehäuse nach erfolgter Verbindung miteinander zu verrasten.

Insbesondere können die Rastmittel ein erneutes Öffnen behindern oder sogar verhindern. Eine Verhinderung eines Öffnungsvorgangs trägt zur Sicherheit bei der Montage von Fotovoltaikanlagen bei, dann ungewolltes Öffnen einer Solarsteckverbindung und der dort anliegenden hohen Gleichspannungen und der hohen fließenden Ströme nicht ungefährlich für Personen sind.

Vorzugsweise weisen die Gewinde an dem Kontaktgehäuse und dem Anschlussgehäuse wenigstens vier und insbesondere zwischen fünf und zehn vollständige Gewindegänge auf. Durch diese Anzahl an Gewindegängen wird einerseits eine feste und dauerhafte Verbindung des Kontaktgehäuses mit dem Anschlussgehäuse gewährleistet, während andererseits die dabei aufzuwendende Kraft relativ gering ist. Außerdem wird der Montageaufwand in Grenzen gehalten, da die Anzahl der nötigen Umdrehungen nicht zu hoch gewählt wird.

In allen Ausgestaltungen ist vorzugsweise ein Kabel an dem Anschlussgehäuse aufgenommen und das Anschlussgehäuse mit dem Kontaktgehäuse verbindbar bzw. verbunden.

Vorzugsweise ist ein Außendurchmesser des Kontaktgehäuses und/oder des Anschlussgehäuses kleiner als der vierfache Außendurchmesser des Kabels. Vorzugsweise liegt der Außendurchmesser des Kontaktgehäuses und/oder des Anschlussgehäuses in einem Bereich zwischen dem etwa 1,2 - fachen und dem 3-fachen Außendurchmesser des Kabels. Unter dem Begriff "Außendurchmesser" wird hier ein Außendurchmesser in einer Ebene verstanden, wo das Kabel sich innerhalb des Gehäuses befindet. Möglich ist es auch, unter dem Begriff einen maximalen Außendurchmesser des Kontaktgehäuses und/oder des Anschlussgehäuses zu verstehen.

Der maximale Außendurchmesser der Kontaktnadel ist insbesondere größer als 10 % des Außendurchmessers des Leiters und insbesondere liegt der maximale Außendurchmesser der Kontaktnadel in einem Bereich zwischen etwa 20% und 50% des Außendurchmessers des Leiters.

In allen Ausführungsformen besteht der Leiter des Kabels insbesondere aus einer Mehrzahl insbesondere flexibler Adern. Durch das Eintauchen einer Kontaktspitze in ein Bündel paralleler Adern eines Leiters werden die vorhandenen Adern radial nach außen gedrängt, wodurch der Kontaktdruck steigt.

In allen Ausgestaltungen ist es bevorzugt, dass der Leiter wenigstens von einer Isolierschicht umgeben ist. Dabei ist ein Außendurchmesser des Kabels wenigstens doppelt so groß wie ein Außendurchmesser des Leiters. Insbesondere kann die radiale Dicke der Isolierschicht etwa dem Durchmesser des Leiters entsprechen, wobei Abweichungen von beispielsweise 20% nach oben und unten möglich sind.

Insbesondere durch eine Solarsteckverbindung, bei der der Außendurchmesser des Kontaktgehäuses und/oder des Anschlussgehäuses kleiner als der 3-fache Außendurchmesser des Kabels beträgt, wird eine besonders klein bauende Solarsteckverbindung ermöglicht, die gegebenenfalls auch innerhalb der Profile von Fenstern oder Rahmen oder in kleinen oder kleinsten Kabelkanälen aufgenommen werden kann.

Weiter Vorteile und Merkmale der Erfindung werden im Folgenden in dem Ausführungsbeispiel erläutert, welches mit Bezug auf die beiliegenden Figuren 1 bis 6 erläutert wird.

Darin zeigen:
- Fig. 1: eine schematische Darstellung einer Fotovoltaikanlage;
- Fig. 2: eine Solarsteckverbindung für die Fotovoltaikanlage aus Fig. 1;
- Fig. 3: eine schematische Darstellung einer Kontaktnadel, die in den Leiter eines anzuschließenden Kabels eintaucht;
- Fig. 4: den Beginn des Verschraubens eines Anschlussgehäuses mit einem Kontaktgehäuse im Schnitt;
- Fig. 5: den fertigen Solarsteckverbinder aus Fig. 4 im Schnitt; und
- Fig. 6: eine schematische Darstellung einer anderen Rückschiebesicherung für eine Solarsteckverbindung.

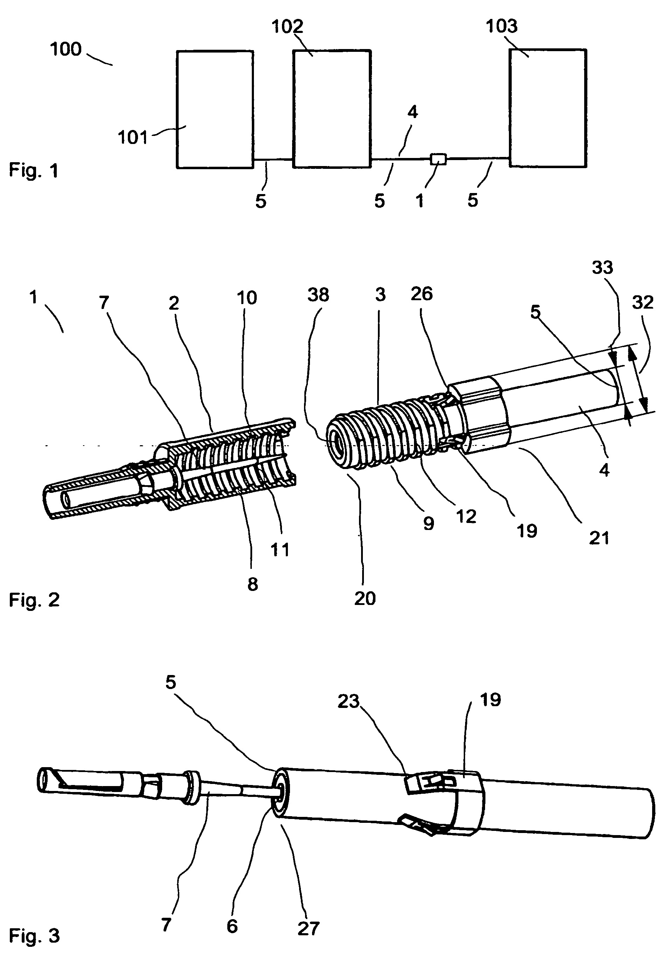

In Figur 1 ist eine stark schematische Ansicht einer Fotovoltaikanlage 100 abgebildet, die hier im einfachen Beispiel drei Solarmodule 101, 102 und 103 aufweist, die mit nicht im Detail dargestellten Fotovoltaikzellen ausgerüstet sind. Die einzelnen Solarmodule 101 bis 103 der Fotovoltaikanlage 100 sind über als Solarkabel ausgeführte Kabel 4 miteinander verbunden, um die nötige elektrische Verbindung herzustellen. Die Solarkabel 5 führen die erzeugte elektrische Leistung ab, können aber zusätzlich auch noch mit Steuerungssignalen beaufschlagt werden.

An Lichtschächten, Dachflächen, Fenstern oder sonstigen baulichen Änderungen und Gegebenheiten ändert sich der normale Abstand eine Solarmoduls 101 zu einem Solarmodul 102 und muss über eine Verlängerung des Anschlusskabels 5überbrückt werden. Da solche Fotovoltaikinstallationen häufig auf schräg angeordneten Dachflächen erfolgen und bei der Montage dort nicht immer jedes Werkzeug zur Hand ist, ist eine einfache Montage ohne besonderes Spezialwerkzeug von Vorteil. Außerdem ist es vorteilhaft, wenn die Solarsteckverbindung 1 kleinbauend ist, um auch durch Profile, Kabelkanäle oder sonstige kleine Zwischenräume durchgeführt werden zu können.

Dabei ist es möglich, dass die Solarsteckverbindung 1 einseitig mit einem freikonfektionierbaren Kabel 4 oder aber auf beiden Seiten mit einem freikonfektionierbaren Kabel 4verbunden werden kann. Bei einer zweiseitigen Verbindungsmöglichkeit ist insbesondere ein symmetrischer Aufbau vorteilhaft.

Figur 2 zeigt die Solarsteckverbindung 1 in einer perspektivischen Explosionsdarstellung, wobei das Kontaktgehäuse 2 halbtransparent dargestellt ist, um einen Einblick in das Innere zu ermöglichen. Das Kontaktgehäuse 2 weist im Inneren eine Kontaktnadel 7 auf, die hier als Kontaktspitze 10 ausgeführt ist und die dafür vorgesehen ist, in eine Eintrittsfläche 38 an dem Anschlussgehäuse 3 einzutauchen, wenn das Anschlussgehäuse 3 mit dem Kontaktgehäuse 2 verbunden wird.

In dem Anschlussgehäuse 3 ist ein Solarkabel 5 als Kabel 4 vom hinteren Ende in den hohlzylindrisch ausgebildeten Kabelaufnahmebereich 12 eingeführt, bis das Solarkabel 5 und insbesondere der darin enthaltene Leiter 6 an der Eintrittsfläche 38 am vorderen Ende 20 des Anschlussgehäuses sichtbar ist und dort anliegt. Eine Rückschiebesicherung 19 sichert das Solarkabel 5 vor einem unbeabsichtigten Zurückschieben. Gleichzeitig stellt die Rückschiebesicherung 19 auch eine Zugentlastung dar, falls am hinteren Ende des Solarkabels 5 Zug aufgebracht wird.

In Figur 2 ist deutlich zu sehen, dass die Solarsteckverbindung 1 insgesamt sehr klein bauend ausgeführt wird, da der Außendurchmesser 33 des Solarkabels 5 hier nur etwa halb so groß ist wie der maximale Außendurchmesser 32 der Solarsteckverbindung 1. Insgesamt weist das etwa als Hohlschraube ausgeführte Anschlussgehäuse 3 ein Außengewinde 14 als Gewinde 9 auf, welches zur elektrischen Verbindung in das als Innengewinde 13 ausgeführte Gewinde 8 in dem Kontaktgehäuse 2 eingeschraubt wird. Dabei tritt die Kontaktspitze 10 der Kontaktnadel 7 in die Eintrittsfläche 38 an dem Anschlussgehäuse 3 ein und wird zentrisch von dem dort vorgesehenen Leiter 6 des Solarkabels 5 aufgenommen.

Figur 3 zeigt eine Darstellung der Kontaktspitze 10 der Kontaktnadel 7 und des anzuschließenden Solarkabels 5, wobei das Anschlussgehäuse 3 und das Kontaktgehäuse 2 weggelassen wurden. Klar erkennbar ist der Leiter 6 und die den Leiter umgebene Leiterisolation 27. In den Leiter 6 ist die Kontaktspitze 7 eingetaucht. Weiterhin abgebildet ist an dem Solarkabel 5 die Rückschiebesicherung 19, die hier als Federeinrichtung 21 ausgeführt ist und über Federzungen 23 verfügt.

Die vorderen Enden 25 der Federzungen 23 stützen sich an der Leiterisolation 27 des Solarkabels 5 ab, während die hinteren Enden 24 der Federzungen 23 dafür vorgesehen sind, sich an Absätzen 26 in dem Anschlussgehäuse 3 abzustützen.

Die vorderen Enden 25 der Federzonen 23 können leicht in die Leiterisolation 27 eindringen, um eine formschlüssige Verbindung zu erzielen, sodass das Solarkabel 5 axial nicht mehr aus dem Anschlussgehäuse 3 heraus geschoben werden kann, ohne Gewalt anzuwenden.

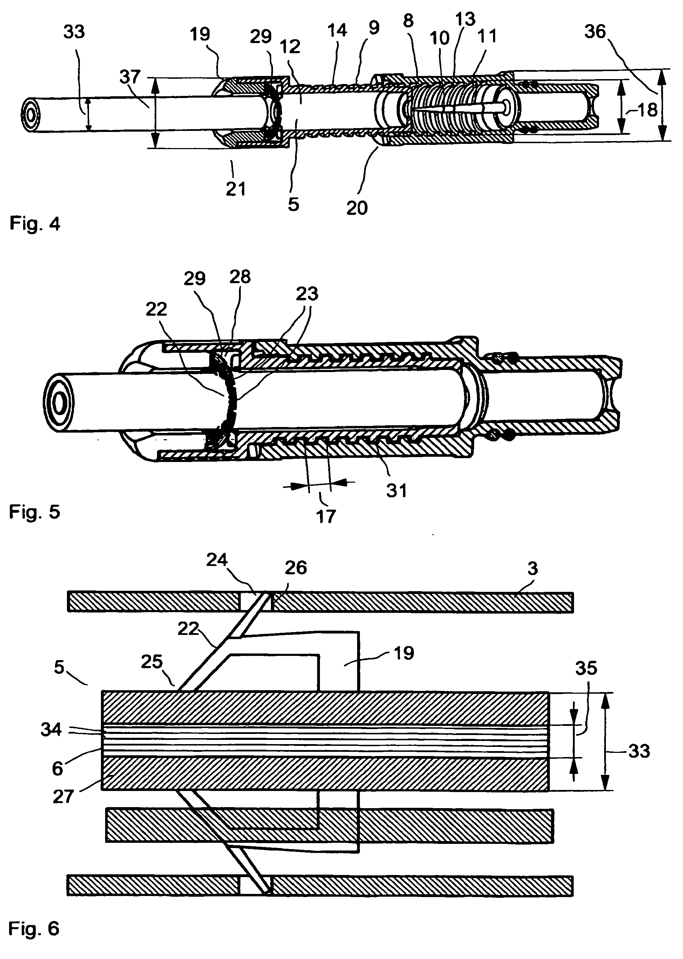

Figur 4 zeigt den Beginn des Montagesvorgangs eine Solarsteckverbindung 1, wenn das Anschlussgehäuse 3 mit dem Außengewinde 14 in das Kontaktgehäuse 2 eingeführt wird. Im Anschluss daran wird das Kontaktgehäuse 2 mit dem Anschlussgehäuse 3 verschraubt, wobei das Außengewinde 14 des Anschlussgehäuses 3 in das Innengewinde 13 des Kontaktgehäuses 2 eingreift.

Zur Verschraubung stehen hier sieben bis acht Gewinderinge zur Verfügung, sodass mit relativ leichter Drehkraft und insbesondere von Hand das Anschlussgehäuse 3 bzw. das Kontaktgehäuse 3 gedreht werden kann, um die Kontaktnadel 7 mit der Kontaktspitze 10 in den Leiter 6 des Solarkabels 5 einzuführen.

Der Außendurchmesser 18 des Kontaktgehäuses 2 ist hier etwa so groß wie der Außendurchmesser 37 des Anschlussgehäuses 3, sodass beide Außendurchmesser etwa dem maximalen Außendurchmesser 32 des Solarsteckverbinders 1 entsprechen. Der Außendurchmesser 32 ist hier etwa doppelt so groß, wie der Außendurchmesser 33 des Solarkabels 5.

Dadurch bedingt, dass die Gewindesteigung relativ gering ist und etwa nur ein Viertel des Außendurchmessers des Außengewindes 14 pro Gewindegang beträgt, wird eine hohe Kraftübersetzung erzielt, sodass mit einer relativ geringen Drehkraft eine hohe axiale Eindringkraft der Kontaktnadel 7erzielt wird.

Figur 5 zeigt den fertigen Zustand, in der die Kontaktnadel 7 soweit als möglich in den Leiter 6 des Solarkabels 5 eingedrungen ist. Dadurch wird eine sehr große Kontaktfläche zwischen dem Leiter 6 und der Kontaktnadel 7 ermöglicht.

Zur Dichtung kann eine Dichtungseinrichtung 28 vorgesehen sein , die über eine konische Anschlagfläche 29 verfügen kann, an die sich die Federeinchtung 22 bzw. die Rückschiebesicherung 19 anliegen kann, um die Anschlenkung der Federschenkel 23 der Kontaktfeder 22 zu begrenzen.

Figur 6 zeigt eine Rückschiebesicherung 19, bei der die vorderen Enden 25 der Federzonen 23 an der Leiterisolation 27 des Solarkabels 5 anliegen, während die hinteren Ende 24 sich an einem Absatz 26 des Anschlussgehäuses 3 abstützen. Dabei können die hinteren Enden 25 der Federzonen 23 sich durch ein Fenster in dem Anschlussgehäuse 3 nach außen erstrecken.

In Figur 6 ist ebenfalls sichtbar, dass die radiale Dicke der Isolationsschicht 27 im Ausführungsbeispiel etwa genauso dick ist wie der Durchmesser 35 des Leiters 6, sodass die Dicke der Isolation zwischen etwa 25% und 50% des gesamten Außendurchmessers 33 des Solarkabels 5 beträgt.

Insgesamt stellt die Erfindung eine klein bauende Solarsteckverbindung 1 zur Verfügung, mit der ohne Werkzeug und insbesondere ohne Spezialwerkzeug Solarkabel 5 verlängert werden können. Die Solarsteckverbindung kann nicht nur als Verbindung von Solarmodulen eingesetzt werden, sondern kann generell als elektrische Verbindungseinrichtung zur Leistungsübertragung eingesetzt werden. Ein einfacher Seitenschneider reicht aus, um die Länge eines benötigten Solarkabels 5 zu konfektionieren. Das Ende des Solarkabels 5 wir von hinten in das Anschlussgehäuse 3 eingeschoben, bis der Leiter 6 an der vorderen Eintrittsfläche 38 anliegt. Durch die in dem Anschlussgehäuse 3 vorgesehene Rückschiebesicherung 19 wird das Solarkabel 5 sicher an dem Anschlussgehäuse 3 aufgenommen, auch wenn von vorne die Kontaktnadel 7 in die Eintrittsfläche 38 eintritt und somit erheblichen axialen Druck auf das Solarkabel 5 aufübt.

An der Kontaktnadel 7 kann noch ein Gel oder Klebstoff zugegeben werden, um die Verbindung noch sicherer gegen Eintritt von Wasser oder dergleichen zu schützen.

### Bezugszeichenliste

| | |
|---|---|
| Solarsteckverbindung | 1 |
| Kontaktgehäuse | 2 |
| Anschlussgehäuse | 3 |
| Kabel | 4 |
| Solarkabel | 5 |
| Leiter | 6 |
| Kontaktnadel | 7 |
| Gewinde | 8 |
| Gewinde | 9 |
| Kontaktspitze | 10 |
| Aufnahmebereich | 11 |
| Kabelaufnahmebereich | 12 |
| Innengewinde | 13 |
| Außengewinde | 14 |
| Durchmesserstufe | 15, 16 |
| Gewindesteigung | 17 |
| Außendurchmesser, Kontaktgehäuse | 18 |
| Rückschiebesicherung | 19 |
| Vorderes Ende | 20 |
| Hinteres Ende | 21 |
| Federeinrichtung | 22 |
| Federzunge | 23 |
| Hinteres Ende | 24 |
| Vorderes Ende | 25 |
| Absatz | 26 |
| Leiterisolation | 27 |
| Dichtungseinrichtung | 28 |
| konische Anschlagfläche | 29 |
| Rastmittel | 30 |
| Gewindegang | 31 |
| Außendurchmesser des Solarsteckverbinders | 32 |
| Außendurchmesser des Kabels | 33 |
| Ader | 34 |
| Außendurchmesser des Leiters | 35 |
| Außendurchmesser des Gewindes | 36 |
| Außendurchmesser des Anschlussgehäuses | 37 |
| Eintrittsfläche | 38 |
| Fotovoltaikanlage | 100 |
| Solarmodul | 101-103 |

## Patentansprüche

1. Solarsteckverbindung (1) für Fotovoltaikanlagen umfassend wenigstens ein Kontaktgehäuse (2) und wenigstens ein Anschlussgehäuse (3),
wobei das Anschlussgehäuse (3) mit dem Kontaktgehäuse (2) verbindbar ist und zur Aufnahme wenigstens eines frei konfektionierbaren Kabels (4) mit einem Leiter (6) dient,
wobei an dem Kontaktgehäuse (2) eine Kontaktnadel (7) zur Kontaktierung des Leiters (6) eines anzuschließenden Kabels (4) angeordnet ist, und dass an dem Kontaktgehäuse (2) ein Gewinde (8) angeordnet ist, welches dafür vorgesehen ist, mit einem an dem Anschlussgehäuse (3) vorgesehenen Gewinde (9) zusammenzuwirken, um beim Verschrauben des Kontaktgehäuses (2) und des Anschlussgehäuses (3) die Kontaktnadel (7) von vorn definiert in den Leiter (6) des Kabels (4) einzuführen
**dadurch gekennzeichnet,**
**dass** an dem Anschlussgehäuse (3) eine Rückschiebesicherung (19) vorgesehen ist, welche einen vom hinteren Ende (21) aus in das Anschlussgehäuse (3) eingeschobenes Kabel (4) sichert, wenn von dem vorderen Ende (20) Druck auf ein darin eingeführtes Kabel (4) ausgeübt wird.

2. Solarsteckverbindung (1) nach Anspruch 1, wobei das Kontaktgehäuse (2) einen hohlzylindrischen Aufnahmebereich (11) aufweist, in dem die Kontaktnadel (7) zentrisch angeordnet ist und/oder wobei das Anschlussgehäuse (3) einen hohlzylindrischen Kabelaufnahmebereich (12) aufweist, der zur Aufnahme eines Kabels (4) mit einem zentrischen angeordnetem Leiter (6) vorgesehen ist.

3. Solarsteckverbindung (1) nach einem der vorhergehenden Ansprüche, wobei das Kontaktgehäuse (2) ein Innengewinde (13) aufweist, welches mit einem Außengewinde (14) des Anschlussgehäuses (3) zusammenwirkt.

4. Solarsteckverbindung (1) nach einem der vorhergehenden Ansprüche, wobei die Kontaktnadel (7) eine sich zum Ende hin verjüngende Spitze (10) aufweist und wenigstens zwei radiale Durchmesserstufen (15, 16) aufweisen kann.

5. Solarsteckverbindung (1) nach einem der vorhergehenden Ansprüche, wobei das Verhältnis von Gewindesteigung (17) pro Umdrehung zu Außendurchmesser (18) des Kontaktgehäuses kleiner als 1:3 und insbesondere kleiner als 1:5 beträgt.

6. Solarsteckverbindung (1) nach einem der vorhergehenden Ansprüche, wobei die Rückschiebesicherung (19) eine Federeinrichtung (22) mit mehreren Federzungen (23) umfasst, wobei sich die näher am hinteren Ende (21) des Anschlussgehäuses (3) angeordneten hinteren Enden (24) der Federzungen (23) radial weiter außen befinden als die weiter vorn angeordneten vorderen Enden (25) der Federzungen (23) und wobei sich die hinteren Enden (24) der Federzungen (23) nach hinten hin an dem Anschlussgehäuse (3) abstützen.

7. Solarsteckverbindung (1) nach einem der vorhergehenden Ansprüche, wobei die Rückschiebesicherung (19) an eine Dichtungseinrichtung (28) grenzt und wobei die Federzungen (23) der Rückschiebesicherung (19) durch eine konische Anschlagfläche (29) an der Dichtungseinrichtung (28) begrenzt werden.

8. Solarsteckverbindung (1) nach einem der vorhergehenden Ansprüche, wobei an dem Kontaktgehäuse (2) und dem Anschlussgehäuse (3) Rastmittel (30) vorgesehen sind, die dafür vorgesehen sind, nach erfolgter Verbindung miteinander zu verrasten und die insbesondere ein erneutes Öffnen behindern.

9. Solarsteckverbindung (1) nach einem der vorhergehenden Ansprüche, wobei die Gewinde (8, 9) an dem Kontaktgehäuse (2) und dem Anschlussgehäuse (3) wenigstens vier, insbesondere zwischen fünf und zehn vollständige Gewindegänge (31) umfassen.

10. Solarsteckverbindung (1) nach einem der vorhergehenden Ansprüche, wobei ein Kabel (4) an dem Anschlussgehäuse (3) aufgenommen und wobei das Anschlussgehäuse (3) mit dem Kontaktgehäuse (2) verbunden ist.

11. Solarsteckverbindung (1) nach einem der vorhergehenden Ansprüche, wobei ein Außendurchmesser (32) des Kontaktgehäuses (2) und/oder des Anschlussgehäuses (3) kleiner als der Vierfache Außendurchmesser (33) des Kabels (4) ist und vorzugsweise in einem Bereich zwischen dem 1,2-fachen und dem 3-fachen Außendurchmesser (33) des Kabels (4) liegt.

12. Solarsteckverbindung (1) nach einem der vorhergehenden Ansprüche, wobei der Leiter (6) des Kabels (4) aus mehreren flexiblen Adern (34) besteht.

13. Solarsteckverbindung (1) nach einem der vorhergehenden Ansprüche, wobei der Leiter (6) von einer Isolierschicht (27) umgeben ist und wobei ein Außendurchmesser (33) des Kabels wenigstens doppelt so groß wie ein Außendurchmesser (35) des Leiters (6) ist.

## Claims

1. A solar plug connector (1) for photovoltaic plant comprising at least one contact housing (2) and at least one connector housing (3),
wherein the connector housing (3) can be connected with the contact housing (2) and serves to receive at least one cable (4) that can be freely made up with a conductor (6),
wherein a contact needle (7) is arranged on the contact housing (2) for purposes of making contact with the conductor (6) of a cable (4) that is to be connected, and a thread (8) is arranged on the contact housing (2), which is provided for purposes of interacting with a thread (9) provided on the connector housing (3), so that when the contact housing (2) and the connector housing (3) are screwed together the contact needle (7) is introduced in a defined manner from the front into the conductor (6) of the cable (4),
**characterised in**
**that** a push-back safeguard (19) is provided on the connector housing (3); this secures a cable (4) pushed from the rear end (21) into the connector housing (3), if pressure is exerted from the front end (20) onto a cable (4) that has been therein introduced.

2. The solar plug connector (1) in accordance with claim 1, wherein the contact housing (2) has a hollow cylindrical reception region (11), in which the contact needle (7) is centrally arranged, and/or wherein the connector housing (3) has a hollow cylindrical cable reception region (12), which is provided for purposes of receiving a cable (4) with a centrally arranged conductor (6).

3. The solar plug connector (1) in accordance with one of the preceding claims, wherein the contact housing (2) has an internal thread (13), which interacts with an external thread (14) of the connector housing (3).

4. The solar plug connector (1) in accordance with one of the preceding claims, wherein the contact needle (7) has a tip (10) that tapers towards the end, and can have at least two radial steps in diameter (15, 16).

5. The solar plug connector (1) in accordance with one of the preceding claims, wherein the ratio of the thread pitch (17) per revolution to the outer diameter (18) of the contact housing is less than 1:3, and in particular is less than 1:5.

6. The solar plug connector (1) in accordance with one of the preceding claims, wherein the push-back safeguard (19) comprises a spring device (22) with a plurality of spring tongues (23), wherein the ends (24) of the spring tongues (23) arranged nearer to the rear end (21) of the connector housing (3) are located radially further outwards than the front ends (25) of the spring tongues (23) arranged further forward, and wherein the rear ends (24) of the spring tongues (23) are supported rearwards on the connector housing (3).

7. The solar plug connector (1) in accordance with one of the preceding claims, wherein the push-back safeguard (19) abuts onto a sealing device (28), and wherein the spring tongues (23) of the push-back safeguard (19) are bounded by a conical stop face (29) on the sealing device (28).

8. The solar plug connector (1) in accordance with one of the preceding claims, wherein latching means (30) are provided on the contact housing (2) and the connector housing (3); these are provided for purposes of latching with one another after a connection has been made, and in particular prevent any renewed opening.

9. The solar plug connector (1) in accordance with one of the preceding claims, wherein the threads (8, 9) on the contact housing (2) and the connector housing (3) comprise at least four, in particular between five and ten, full thread turns (31).

10. The solar plug connector (1) in accordance with one of the preceding claims, wherein a cable (4) is received in the connector housing (3), and wherein the connector housing (3) is connected with the contact housing (2).

11. The solar plug connector (1) in accordance with one of the preceding claims, wherein an outer diameter (32) of the contact housing (2), and/or of the connector housing (3), is less than four times the outer diameter (33) of the cable (4), and preferably lies in a range between 1.2 times and 3 times the outer diameter (33) of the cable (4).

12. The solar plug connector (1) in accordance with one of the preceding claims, wherein the conductor (6) of the cable (4) consists of a plurality of flexible wires (34).

13. The solar plug connector (1) in accordance with one of the preceding claims, wherein the conductor (6) is surrounded by an insulation layer (27), and wherein an outer diameter (33) of the cable is at least twice as large as an outer diameter (35) of the conductor (6).

## Revendications

1. Connexion enfichable solaire (1) pour installations photovoltaïques, comprenant au moins un boîtier de contact (2) et au moins un boîtier de raccordement (3),
dans laquelle le boîtier de raccordement (3) peut être relié au boîtier de contact (2) et sert à la réception d'au moins un câble (4), pouvant être confectionné librement, avec un conducteur (6),
dans laquelle une aiguille de contact (7) est disposée au niveau du boîtier de contact (2) pour établir le contact avec le conducteur (6) d'un câble (4) à raccorder, et un filetage (8) étant aménagé sur le boîtier de contact (2), lequel est prévu pour coopérer avec un filetage (9) prévu au niveau du boîtier de raccordement (3) afin de, lors du vissage du boîtier de contact (2) et du boîtier de raccordement (3), introduire de manière définie l'aiguille de contact (7) par l'avant dans le conducteur (6) du câble (4),
**caractérisée**
**en ce qu'**un dispositif de protection contre le refoulement (19) est prévu au niveau du boîtier de raccordement (3), lequel protège un câble (4) inséré à partir de l'extrémité arrière (21) dans le boîtier de raccordement (3) lorsqu'une pression est exercée par l'extrémité avant (20) sur un câble (4) qui y est inséré.

2. Connexion enfichable solaire (1) selon la revendication 1, dans laquelle le boîtier de contact (2) présente une zone de réception (11) en forme de cylindre creux dans laquelle l'aiguille de contact (7) est disposée de manière centrée, et/ou dans laquelle le boîtier de raccordement (3) présente une zone de réception de câble (12) en forme de cylindre creux qui est prévue pour la réception d'un câble (4) avec un conducteur (6) disposé de manière centrée.

3. Connexion enfichable solaire (1) selon l'une des revendications précédentes, dans laquelle le boîtier de contact (2) présente un filetage intérieur (13), lequel coopère avec un filetage extérieur (14) du boîtier de raccordement (3).

4. Connexion enfichable solaire (1) selon l'une des revendications précédentes, dans laquelle l'aiguille de contact (7) présente une pointe (10) s'effilant vers l'extrémité et peut présenter au moins deux étagements de diamètre radiaux (15, 16).

5. Connexion enfichable solaire (1) selon l'une des revendications précédentes, dans laquelle le rapport entre le pas de filetage (17) par rotation et le diamètre extérieur (18) du boîtier de contact est inférieur à 1:3, et en particulier inférieur à 1:5.

6. Connexion enfichable solaire (1) selon l'une des revendications précédentes, dans laquelle le dispositif de protection contre le refoulement (19) comprend un dispositif à ressort (22) avec plusieurs languettes élastiques (23), dans laquelle les extrémités arrières (24) des languettes élastiques (23) disposées plus près de l'extrémité arrière (21) du boîtier de raccordement (3) se trouvent radialement plus loin vers l'extérieur que les extrémités avant (25) des languettes élastiques (23) disposées plus vers l'avant, et dans laquelle les extrémités arrières (24) des languettes élastiques (23) sont en appui vers l'arrière sur le boîtier de raccordement (3).

7. Connexion enfichable solaire (1) selon l'une des revendications précédentes, dans laquelle le dispositif de protection contre le refoulement (19) est limitrophe d'un dispositif d'étanchéité (28), et dans laquelle les languettes élastiques (23) du dispositif de protection contre le refoulement (19) sont délimitées par une surface de butée conique (29) au niveau du dispositif d'étanchéité (28).

8. Connexion enfichable solaire (1) selon l'une des revendications précédentes, dans laquelle on prévoit des moyens d'encliquetage (30) au niveau du boîtier de contact (2) et du boîtier de raccordement (3), lesquels sont prévus, une fois la liaison établie, pour s'encliqueter les uns avec les autres et lesquels empêchent en particulier une réouverture.

9. Connexion enfichable solaire (1) selon l'une des revendications précédentes, dans laquelle les filetages (8, 9) au niveau du boîtier de contact (2) et du boîtier de raccordement (3) comprennent au moins quatre, en particulier entre cinq et dix pas de filet (31) complets.

10. Connexion enfichable solaire (1) selon l'une des revendications précédentes, dans laquelle un câble (4) est réceptionné au niveau du boîtier de raccordement (3) et dans laquelle le boîtier de raccordement (3) est relié au boîtier de contact (2).

11. Connexion enfichable solaire (1) selon l'une des revendications précédentes, dans laquelle un diamètre extérieur (32) du boîtier de contact (2) et/ou du boîtier de raccordement (3) est plus petit que quatre fois le diamètre extérieur (33) du câble (4) et se situe de préférence dans une plage comprise entre 1,2 fois et 3 fois le diamètre extérieur (33) du câble (4).

12. Connexion enfichable solaire (1) selon l'une des revendications précédentes, dans laquelle le conducteur (6) du câble (4) se compose de plusieurs brins (34) flexibles.

13. Connexion enfichable solaire (1) selon l'une des revendications précédentes, dans laquelle le conducteur (6) est entouré par une couche isolante (27), et dans laquelle un diamètre extérieur (33) du câble est au moins deux fois aussi grand que le diamètre extérieur (35) du conducteur (6).
